# EUROPÄISCHE PATENTSCHRIFT

(11) **EP 1 531 165 B1**
(45) Veröffentlichungstag und Bekanntmachung des Hinweises auf die Patenterteilung: **28.02.2007**
(21) Anmeldenummer: 04026209.9
(22) Anmeldetag: 04.11.2004
(51) Int. Cl.: C08G 18/36, C04B 26/16, E21D 20/02

(54) **Verwendung hydrophober Polyole als Komponente für chemische Befestigungsmassen auf Polyurethan-Basis**
Use of hydrophobic polyols as component for chemical fastening mortars on polyurethane basis
Utilisation des polyols hydrophobiques comme composants des compositions de montage chimiques à base de polyuréthane.

(30) Priorität: 12.11.2003 DE 10352690
(43) Veröffentlichungstag der Anmeldung: 18.05.2005
(73) Patentinhaber: Cognis IP Management GmbH, 40589 Düsseldorf (DE)
(72) Erfinder: Roloff, Thorsten, 40597 Düsseldorf (DE); Nagorny, Ulrich, 40721 Hilden (DE); Bourscheidt, Georg, 40593 Düsseldorf (DE)

(56) Entgegenhaltungen:
- EP-A- 0 420 022
- EP-A- 0 432 087
- US-A1- 2003 090 016

## Beschreibung

### Gebiet der Erfindung

Die Erfindung betrifft die Verwendung spezieller, fettchemisch basierter, hydrophober Polyole als Komponente für chemische Befestigungsmassen auf Polyurethan-Basis.

### Stand der Technik

Das Bedürfnis nach kürzeren Bauzeiten führte mit der Entwicklung der Bohrtechnologie zur Anwendung von nachträglich montierbaren Befestigungssystemen. Neben der Vielzahl an Metalldübeln und Kunststoffdübeln werden immer häufiger chemische Befestigungsmassen, vom Fachmann auch als "chemische Dübel" bezeichnet, verwendet. Die Kunstharzmörtel für chemische Dübel sind Zwei-Komponenten-Systeme, die in der Regel in Zweikammer Glas- oder Kunststoffpatronen oder Zweikammer-Kartuschen abgefüllt werden. Der Vorteil beim Einsatz chemischer Dübel ist, daß hierdurch eine spreizdruckfreie Montage ermöglicht wird. Die beiden Komponenten des Kunstharzmörtels werden kurz vor ihrer Verarbeitung vermischt, wobei gewünschtenfalls weitere Zusatzstoffe wie Pigmente, Füllstoffe, Additive, Zement, Beschleuniger (Härter) vorhanden sein können.

Es ist insbesondere bekannt, Kunstharz-Mörtelmassen mit einem Gehalt an härtbaren, ungesättigten Polyestern, Epoxyacrylaten, Urethan-bildenden Isocyanaten und/oder Epoxiden für die spreizdruckfreie Befestigung von Ankerstangen in Bohrlöchern zu verwenden. Zu diesem Zweck werden die Massen zusammen mit dem Härter in das Bohrloch eingebracht. Hierzu können auch Massen mittels Kartusche, Auspressgerät und Statikmischer in ein Bohrloch gemischt und dosiert appliziert werden. Es ist auch möglich, den härtbaren Bestandteil und den Härter, wie Isocyanat und Hydroxylverbindung, also die jeweiligen Ausgangskomponenten, in zwei Kammern einer Patrone getrennt zu konfektionieren. Durch drehendes Einbringen des Ankers in das die Patrone enthaltende Bohrloch werden die Kammern zerstört und die beiden Komponenten vermischt. Das Festigkeitsniveau der schliesslich erzielten Befestigung ist vor allem abhängig vom Bindemittelsystem.

Ungesättigte Polyesterharzsysteme auf Basis von o- und/oder iso-Phthalsäure, Malein- bzw. Fumarsäure als Dicarbonsäure und Dialkoholen, weisen bei den gestiegenen Anforderungen bei Befestigungen gewisse Schwächen auf. Die bisherigen Grenzen der Systeme sind die Wärmeformbeständigkeit, die Alterungsbeständigkeit - insbesondere bei Einfluss von Feuchtigkeit, Temperaturwechseln und Alkalität - starker Schrumpf, mangelhafte Adhäsion und die Inhibierung der Oberflächenaushärtung durch Sauerstoff.

Epoxyacrylate, Kondensate aus Methacrylsäure und/oder Acrylsäure mit Epoxidverbindungen auf Basis von Bisphenol-A, Bisphenol-F oder Novolaken, besitzen eine höhere Beständigkeit gegen Klimaeinflüsse sowie vor allem gegen Alkalität und verbesserte Adhäsionseigenschaften gegenüber den ungesättigten Polyesterharzen, aber eine geringere dreidimensionale Vernetzung. Schrumpf und Inhibierung der Oberflächenhärtung durch Sauerstoff sind vergleichbar mit denen der ungesättigten Polyesterharze.

Epoxidharze besitzen ebenfalls eine sehr lange Aushärtungszeit und können nicht bei Temperaturen unter +5° C eingesetzt werden. Ihre Härtungssysteme für niedrige Temperaturen sind feuchtigkeitsempfindlich. Ihre Adhäsionseigenschaften sind bei Raumtemperatur sehr gut.

Polyurethane besitzen sehr gute Adhäsionseigenschaften, haben jedoch einen besonders schwerwiegender Nachteil, nämlich die Empfindlichkeit in Gegenwart von Feuchtigkeit. Dies liegt daran, daß bei der Polyurethanbildung aus den Komponenten Polyol und Isocyanat durch eine Konkurrenzreaktion von Isocyanat mit Wasser, das als Restfeuchte in Beton enthalten ist oder das durch Eindringen von Regen, Kondensation von Luftfeuchtigkeit und dergleichen in Bohrlöcher gelangt ist, Kohlendioxid gebildet wird, was Schaum- und Blasenbildung bewirkt, also zu einer Aufschäumung des Polyurethans führt. Eine derartige Schaumreaktion ist bei Dichtstoffen (z. B. im Bereich von Tür- und Fensterbau) erwünscht. In der Anwendung als chemischer Dübel führt Schaumbildung jedoch zwangsläufig zu Störungen im Polyurethan-Gefüge und damit zur Festigkeitsreduzierung. Dies hat dazu geführt, daß Polyurethan-basierte chemische Dübel bisher keine praktische Bedeutung gefunden haben.
In der Praxis dominieren derzeit auf dem Gebiet der chemischen Dübel Derivate von Acryl- und Methacrylsäure, da diese durch radikalische Polymerisation auch bei tieferen Temperaturen schnell reagieren. Polyurethan-Systeme weisen hier eine vergleichsweise langsamere Härtung auf. Auf der anderen Seite sind Polyurethane den genannten (Meth)acrylsäurederivat-Systemen hinsichtlich ihrer Elastizität überlegen.

**EP-B-432,087** beschreibt die Verwendung von radikalisch härtbaren Vinylesterurethanharzen zur Befestigung von Ankern in Bohrlöchern.

**WO-A-00/29498** bechreibt Zweikomponentenmassen für chemische Befestigungen, enthaltend ein radikalisch härtbares Kunstharz und ein Härtungsmittel für das Kunstharz . Um gute Hafteigenschaften der Befestigung in einem feuchten Beton zu erreichen ist dabei vorgesehen, als härtbares Kunstharz ein Mono(meth)acrylat eines alkoxylierten Bisphenols zu verwenden.

### Beschreibung der Erfindung

Aufgabe der vorliegenden Erfindung war es, Polyole zur Verfügung zu stellen, die sich als Komponente für chemische Befestigungsmassen auf Polyurethan-Basis eignen und die bewirken, daß die entsprechenden Polyurethan-basierten chemischen Dübel, also die chemischen Befestigungsmassen, die durch Kombination dieser Polyole mit Isocyanaten erhalten werden, weitgehend unempfindlich gegen Feuchtigkeit sind. Es sollten also chemische Dübel auf Polyurethan-Basis bereitgestellt werden, die den gravierendsten Nachteil derartiger Polyurethan-Systeme, nämlich deren unerwünschte Schaumbildung in Gegenwart von Wasser, die unter Praxis-relevanten Bedingungen sehr häufig auftritt, nicht aufweisen und die auch in feuchten Bohrlöchern eine gute Haftung zur Bohrlochwandung und hohe Festigkeitswerte aufweisen.

Überraschenderweise wurde nun gefunden, daß Polyole mit mindestens 12 C-Atomen pro Molekül und mindestens 2 OH-Gruppen pro Molekül, mit der Maßgabe, daß pro Molekül maximal eine OH-Gruppe pro 6 Kohlenstoffatome vorhanden ist und der weiteren Maßgabe, daß in den Polyol-Molekülen keine Strukturelemente (-CH₂-CH₂-O-)ₙ, wobei n eine ganze Zahl bedeutet, die mindestens zwei beträgt, vorhanden sind,
mit der Maßgabe, dass die Polyole ausgewählt sind aus der Gruppe
- der Polyole, die erhältlich sind, indem man ein- und/oder mehrwertige Alkohole mit 1 bis 8 C-Atomen an epoxidierte Triglyceridöle und/oder deren Alkylester addiert, die gegebenenfalls gereinigten Additionsprodukte gewünschtenfalls mit Propylenoxid zur Reaktion bringt und die Produkte gegebenenfalls einer thermischen Nachbehandlung unterzieht und
- der Dimerdiole und/oder Trimertriole die gestellte Aufgabe in jeder Hinsicht ausgezeichnet erfüllen und sich als Komponente für chemische Befestigungsmassen auf Polyurethan-Basis eignen. Mit anderen Worten: chemische Dübel auf Polyurethan Basis, also mit den Komponenten Polyol und Isocyanat, wobei es sich bei dem Polyol um das oben näher definierte Polyol handelt, neigen nur in äußerst untergeordnetem Maße zu Schaumbildung, wenn bei der Applikation in den Bohrlöchern Restfeuchtigkeit vorhanden ist.
   Durch Zusatz entsprechender Formulierungsbestandteile lässt sich außerdem eine für die Praxis aureichend schnelle Aushärtung sowie gutes Penetrationsvermögen in den Beton sicherstellen, wodurch auch ein Einsatz bei tieferen Temperatur (unterhalb 0 °C) möglich ist. Beispiele für solche Formulierungen sind etwa Zinnmethylhexoate, Dibutylzinndilaurate, Zinncarboxylate, Wismutneodecanoate, Zirkoniumchelate, tertiäre Amine.

Gegenstand der vorliegenden Erfindung ist zunächst die Verwendung von Polyolen mit mindestens 12 C-Atomen pro Molekül und mindestens 2 OH-Gruppen pro Molekül, mit der Maßgabe, daß pro Molekül maximal eine OH-Gruppe pro 6 Kohlenstoffatome vorhanden ist und der weiteren Maßgabe, daß in den Polyol-Molekülen keine Strukturelemente (-CH₂-CH₂-O-)ₙ, wobei n eine ganze Zahl bedeutet, die mindestens zwei beträgt, vorhanden sind,
mit der Maßgabe, dass die Polyole ausgewählt sind aus der Gruppe
- der Polyole, die erhältlich sind, indem man ein- und/oder mehrwertige Alkohole mit 1 bis 8 C-Atomen an epoxidierte Triglyceridöle und/oder deren Alkylester addiert, die gegebenenfalls gereinigten Additionsprodukte gewünschtenfalls mit Propylenoxid zur Reaktion bringt und die Produkte gegebenenfalls einer thermischen Nachbehandlung unterzieht und
- der Dimerdiole und/oder Trimertriole als Komponente für chemische Befestigungsmassen auf Polyurethan-Basis.

Die erfindungsgemäß einzusetzenden Polyole haben hydrophoben Charakter. Dies geht sowohl aus der Formulierung "daß pro Molekül maximal eine OH-Gruppe pro sechs Kohlenstoffatome vorhanden ist" hervor, womit ausgedrückt ist, daß es bezüglich des Verhältnisses von OH-Gruppen und Gesamtzahl der C-Atome - beides bezogen auf ein Molekül - eine definierte Obergrenze gibt, als auch aus der Formulierung, "daß in den Polyol-Molekülen keine Strukturelemente (-CH₂-CH₂-O-)ₙ, wobei n eine ganze Zahl bedeutet, die mindestens zwei beträgt, vorhanden sind."

Diole müssen somit im Rahmen der vorliegenden Erfindung mindestens 12 C-Atome pro Molekül aufweisen, Triole müssen mindestens 18 C-Atome pro Molekül aufweisen, Tetrole müssen mindestens 24 C-Atome pro Molekül aufweisen, usw.
Der Klarheit halber sei festgestellt, daß mit der Bedingung, "daß pro Molekül maximal eine OH-Gruppe pro sechs Kohlenstoffatome vorhanden ist" keinesfalls gemeint ist, daß die Anzahl der C-Atome der Polyole etwa ein ganzzahliges Vielfache von 6 betragen muß. Es sei daher ausdrücklich festgestellt, daß die Anzahl der C-Atome pro Polyol-Molekül im Rahmen der gegebenen Definition (mindestens 12 C-Atome) keinen Einschränkungen unterliegt. Weist etwa ein Polyol 18 C-Atome pro Molekül auf, so kann es zwei oder drei OH-Gruppen enthalten; dasselbe gilt auch für Polyole mit 20 C-Atomen pro Molekül und für Polyole mit 22 C-Atomen pro Molekül. Tetrole kann es daher erst ab 24 C-Atomen pro Molekül geben, usw.
In einer bevorzugten Ausführungsform der Erfindung gilt die Maßgabe, daß pro Molekül maximal eine OH-Gruppe pro acht Kohlenstoffatomen vorhanden ist. Im Sinne der obigen Erläuterungen bedeutet das, das in dieser bevorzugten Ausführungsform Diole mindestens 16 C-Atome pro Molekül enthalten müssen, Triole mindestens 24, usw.

Die Maßgabe, daß in den Polyol-Molekülen keine Strukturelemente (-CH₂-CH₂-O-)ₙ, wobei n eine ganze Zahl bedeutet, die mindestens zwei beträgt, vorhanden sein dürfen, umschreibt, daß die Polyole keine aus einer Ethoxylierung, d.h. einer Umsetzung von OH-Gruppen enthaltende Verbindungen mit Ethylenoxid, stammenden (hydrophile) Strukturelemente enthalten darf.
Sehr wohl können die Polyol-Moleküle, worauf unten noch eigens hingewiesen wird, Strukturelemente (-CH₂-CH(CH₃)-O-)ₓ, wobei x eine ganze Zahl bedeutet, die mindestens eins beträgt, enthalten, womit umschrieben ist, daß die Polyole gewünschtenfalls aus einer Propoxylierung, d.h. einer Umsetzung von OH-Gruppen enthaltenden Verbindungen mit Propylenoxid stammende (hydrophobe) Strukturelemente enthalten darf.

In einer weiteren Ausführungsform gilt, daß pro Molekül Polyol 2 bis 6 OH-Gruppen vorhanden sind, selbstverständlich unter Beachtung der bereits genannten Maßgaben.

In einer besonders bevorzugten Ausführungsform der Erfindung setzt man solche Polyole ein, die erhältlich sind, indem man ein- und/oder mehrwertige Alkohole mit 1 bis 8 C-Atomen an epoxidierte Triglyceridöle und/oder deren Alkylester addiert, die gegebenenfalls gereinigten Additionsprodukte gewünschtenfalls mit Propylenoxid zur Reaktion bringt und die Produkte gegebenenfalls einer thermischen Nachbehandlung unterzieht. In diesem Zusammenhang sei darauf hingewiesen, daß die in der gerade genannten bevorzugten Ausführungsform angesprochenen speziellen Polyole in EP-B-259,722 als Polyolkomponente zur Herstellung von Polyurethanwerkstoffen mittels der Gießtechnik beschrieben sind. Es sei ausdrücklich festgestellt, daß es sich hierbei um eine völlig andere Applikation handelt, die sich klar von der Verwendung gemäß der vorliegenden Erfindung, nämlich chemische Dübel auf Polyurethan-Basis, wobei diese Systeme unempfindlich gegen Feuchtigkeit in Beton und/oder Bohrlöchern sind, unterscheidet. Dementsprechend ist auch der Gegenstand der vorliegenden Erfindung und insbesondere die hier in Rede stehende bevorzugte Ausführungsform durch EP-B-259,722 weder vorweggenommen noch nahegelegt.
Unter Alkylestern epoxidierter Triglyceridöle (vergleiche den Ausdruck "epoxidierte Triglyceridöle und/oder deren Alkylester" im vorigen Absatz) werden im Rahmen der vorliegenden Erfindung epoxidierte Fettsäurealkylester verstanden, die sich von den epoxidierten Triglyceridölen strukturell formal dadurch ableiten, daß der Alkoholbaustein Glycerin durch den Alkoholbaustein Alkanol ersetzt ist, wobei unter Alkanol in diesem Zusammenhang ein einwertiger primärer Alkohol mit 1 bis 8 Kohlenstoffatomen zu verstehen ist, der gesättigt oder ungesättigt, geradkettig oder verzweigt sein kann. Das Alkanol ist vorzugsweise ein gesättigter Alkohol mit 1 bis 8 Kohlenstoffatomen, insbesondere Methanol, Ethanol, n-Propanol, i-Propanol, Butanol, i-Butanol und 2-Ethylhexanol.
Epoxidierte Triglyceridöle und/oder deren Alkylester sind als solche aus dem Stand der Technik bekannt. Sie finden in anderen technischen Bereichen als sogenannte "Epoxidweichmacher" Verwendung und sind für diese Zwecke auch im Handel kommerziell erhältlich.
Epoxidierte Triglyceridöle sind durch Epoxidation ungesättigter Öle, beispielsweise Sojaöl, Rapsöl, Leinöl, Tallöl, Baumwollsaatöl, Ernußöl, Palmöl, Sonnenblumenöl (alter und neuer Züchtung), Rüböl oder Klauenöl, beispielsweise in Gegenwart katalytischer Mengen von Peressigsäure oder Perameisensäure zugänglich. Durch die Epoxidation werden - je nach eingesetzter Menge Peressigsäure - die olefinischen Doppelbindungen der Fettsäurebausteine des Triglycerids ganz oder teilweise in Oxiranringe überführt. Bevorzugt als ungesättigte Öle sind Triglyceride mit einer Jodzahl von 50 bis 200, die bei weitgehender Epoxidation der olefinischen Doppelbindungen in Epoxidate mit einem Gehalt von 3 bis 10 Gew.-% Epoxidsauerstoff überführt werden. Besonders bevorzugt sind epoxidierte Triglyceridöle mit einem Gehalt von 4 bis 8 Gew.-% Epoxidsauerstoff.

Alkylester epoxidierter Triglyceridöle sind analog durch durch Epoxidation ungesättigter Fettsäurealkylester, einzeln oder im Gemisch untereinander, in Gegenwart katalytischer Mengen von Peressigsäure oder Perameisensäure zugänglich.
Besonders bevorzugte Substanzen aus der Gruppe der epoxidierten Triglyceride bzw. deren Alkylestern sind:
- Epoxidiertes Sojaöl (z.B. Handelsprodukt "Edenol D 81" der Cognis Deutschland GmbH & Co.KG),
- epoxidiertes Leinöl (z.B. Handelsprodukt "Edenol B 316" der Cognis Deutschland GmbH & Co. KG) und
- Iso-Alkylepoxystearat (Z.B. Handelsprodukt "Edenol B 35" der Cognis Deutschland GmbH & Co. KG).

Zur Ringöffnung der epoxidierten Triglyceridöle und/oder deren Alkylestern werden wie schon gesagt ein- und/oder mehrwertige Alkohole mit 1 bis 8 C-Atomen eingesetzt. Als Alkohole kommen dabei sowohl geradkettige Alkohole wie Methanol, Ethanol, n-Propanol, n-Butanol, n-Pentanol, n-Hexanol, n-Heptanol, n-Octanol, Glykol, Trimethylolpropan als auch deren in der Alkylkette verzweigte bzw. die Hydroxylgruppe an einem sekundären oder tertiären C-Atom tragenden Isomeren, beispielsweise i-Propanol, i-Butanol oder 2-Ethylhexylalkohol in Frage. Bevorzugt werden für die Addition an epoxidierte Triglyceridöle und/oder deren Alkylester Alkohole aus der Gruppe Methanol, Ethanol, n-Propanol, i-Propanol, n-Butanol, i-Butanol, t-Butanol und 2-Ethylhexylakohol verwendet. Von diesen ist Methanol aufgrund seiner preiswerten Zugänglichkeit und der guten Ergebnisse, die bei Verwendung dieses Alkohols in den Polyurethanwerkstoffen erzielt werden, besonders bevorzugt.

Die Addition von ein- und/oder mehrwertigen Alkoholen mit 1 bis 8 Kohlenstoffatomen an epoxidierte Triglyceridöle und/oder deren Alkylester wird - wie aus dem Stand der Technik bekannt - bevorzugt in Gegenwart eines sauren Katalysators durchgeführt. Als saure Katalysatoren kommen beispielsweise übliche Mineralsäuren, wie beispielsweise konzentrierte Schwefelsäure, in Frage. Es ist jedoch auch möglich, als saure Katalysatoren Lewis-Säuren, wie Bortrihalogenide oder deren Derivate, zu verwenden oder die Reaktion in Gegenwart eines sauren Ionenaustauschers durchzuführen. Die Verwendung saurer Ionenaustauscher ist wegen der optimalen Möglichkeit der Abtrennung des Katalysators von der Reaktionsmischung besonders bevorzugt. Der Ringöffnungskatalysator kann nach der Reaktion ausgewaschen und ausgefällt werden oder - nach Neutralisation - im Reaktionsprodukt verbleiben. Bevorzugte Verfahrensweise ist die Neutralisation mit Natriummethylat oder insbesondere mit Dialkylethanolaminen, vorzugsweise Dimethyl- oder Diethylethanolamin, unter Belassung des Neutralisationsproduktes im Produktgemisch.

Bei der Addition von ein- und/oder mehrwertigen Alkoholen mit 1 bis 8 C-Atomen an epoxidierte Triglyceridöle und/oder deren Alkylester wird ein Molverhältnis (Alkohol) : (Triglyceridöl) im Bereich von 1,05 bis 10, vorzugsweise von 3 bis 10 mol Alkohol pro Mol Epoxidsauerstoff eingestellt. Dies bedeutet, daß in der Praxis regelmäßig ein Überschuß Alkohol in die Additionsreaktion eingesetzt wird, um sicherzustellen, daß mehr oder weniger alle Oxiranringe geöffnet und in HO-C-C-OR-Gruppen überführt werden, in denen R für den Alkylrest des eingesetzten Alkohols mit 1 bis 8 C-Atomen steht.

Die auf die beschriebene Weise zugänglichen Polyole können nach an sich bekannten Methoden von überschüssigen bzw. nicht umgesetzten Edukten befreit werden. Beispielsweise lässt sich der zur Öffnung der Oxiranringe in den epoxidierten Triglyceridölen und/oder deren Alkylester im Überschuß eingesetze Alkohol durch Destillation, gegebenenfalls unter vermindertem Druck, abkondensieren. Es sind jedoch auch andere, in diesem Bereich an sich bekannte Methoden der Reinigung möglich.

In einer Ausführungsform setzt man die durch Umsetzung von epoxidierten Triglyceridölen und/oder deren Alkylester mit C₁₋₈-Alkoholen zugänglichen Polyole mit Propylenoxid um. Die hierfür erforderlichen Bedingungen sind dem Fachmann einschlägig bekannt. Vorzugsweise stellt man bei der Propoxylierrung ein Molverhältnis (Alkylenoxid) : (mit ein- und/oder mehrwertigen C₁₋₈-Alkoholen ringgeöffnetem epoxidiertem Triglyceridöl und/oder deren Alkylester) einen Wert im Bereich von 1 bis 10 mol Propylenoxid pro Mol Epoxidsauerstoff ein.

Gewünschtenfalls kann man die wie gerade beschrieben zugänglichen Polyole einer thermischen Nachbehandlung unterziehen. Sofern im Zuge der Herstellung der Polyole wie oben beschrieben eine Propoxylierung durchgeführt wurde, kann die thermische Nachreaktion vor und/oder nach der Propoxylierung durchgeführt werden; vorzugsweise wird sie jedoch nach der Propoxylierung durchgeführt.

Die thermische Nachbehandlung der Polyole ist deswegen vorteilhaft, weil dabei der Wassergehalt des Polyols auf diese Weise praktisch auf Null reduziert werden kann, d.h. Polyole zur Verfügung stehen, die weitgehend wasserfrei sind. Eine weitgehende Wasserfreiheit der Polyole reduziert bei ihrem späteren Einsatz, also dem in-Kontaktbringen mit Isocyanaten bzw. einer Isocyanat-Härter-Mischung die Möglichkeit der Schaum- bzw. Blasenbildung, die ja im Rahmen der erfindungsgemäßen Applikation (chemische Dübel) weitgehend unerwünscht ist. Die thermische Nachbehandlung wird in der Praxis bei Temperaturen von 30 bis 200°C durchgeführt. Dabei kann an die Reaktionsmischung auch ein verminderter Druck angelegt werden. Beide Maßnahmen, alleine oder gemeinsam angewandt, sorgen für eine weitgehende Abkondensation von noch in der Reaktionsmischung vorhandenem Wasser und mindern dadurch eine mögliche Blasenbildung beim erfindungsgemäßen Einsatz des Polyols. Dieser Effekt kann noch dadurch unterstützt werden, daß in einer weiteren bevorzugten Ausführungsform im Rahmen der thermischen Nachbehandlung Wasserdampf, Heißluft oder Stickstoffgas durch die Reaktionsmischung hindurchgeleitet wird ("Dämpfung").

In einer weiteren Ausführungsform setzt man solche Polyole für die erfindungsgemäße Verwendung ein, die ausgewählt sind aus der Gruppe der Dimerdiole und/oder Trimertriole.

Dimerdiole sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile an Monomeren sowie an höheren Oligomeren, insbesondere die Trimerfettsäuren, enthalten. Dimerfettsäuren sind handelsübliche Produkte und werden in verschiedenen Zusammensetzungen und Qualitäten angeboten. Dasselbe gilt von den Trimerfettsäuren.

Dimerdiole und Trimertriole sind in der Fachwelt gut bekannt. Beispielhaft sei hierzu auf einen Artikel verwiesen, in dem unter anderem Herstellung, Struktur und Chemie der Dimerdiole behandelt werden: **Fat Sci. Technol. 95 (1993) Nr.3, Seiten 91 - 94.** Im Rahmen der vorliegenden Erfindung sind diejenigen Dimerdiole bevorzugt, die einen Dimergehalt von mindestens 70% aufweisen und bei denen die Zahl der C-Atome pro Dimermolekül überwiegend im Bereich von 36 bis 44 liegt.

Die erfindungsgemäß einzusetzenden Polyole können zum Einsatz kommen in einem **2-komponentigen Reaktionssatz** zur Erzeugung von Kunstharzkörpern, insbesondere zum Einsatz in zerstörbaren Mehrkammerpatronen, für die Verankerung von Befestigungselementen im Befestigungsgrund, insbesondere in Beton, wobei im Reaktionssatz enthalten sind:
a) mindestens ein erfindungsgemäß einzusetzendes Polyol und
b) mindestens ein Isocyanat.

Die Polyole a) werden dabei mit den Isocyanaten b) im Verhältnis (Polyol-OH-Gruppen) : (Isocyanatgruppen) im Bereich von 1 : 0,9 bis 1 : 1,3 und vorzugsweise im Bereich von 1 : 1 bis 1 : 1,2, gemischt.

Hinsichtlich der Polyole a) gilt ansonsten das bereits oben Gesagte.

Als Isocyanate b) lassen sich alle mindestens zwei endständige Isocyanatgruppen enthaltenden Verbindungen verwenden, die üblicherweise zur Herstellung von Polyurethanen herangezogen werden. Die Wahl der Isocyanate unterliegt an sich keinen besonderen Einschränkungen. Prinzipiell lassen sich somit alle dem Fachmann einschlägig bekannten Isocyanate, also Verbindungen, die ein oder mehrere -N=C=O - Gruppen enthalten, einsetzen.

Vorzugsweise setzt man Diisocyanate, Oligo- bzw. Polyisocyanate, sowie Gemische dieser Verbindungen ein. Zu den Polyisocyanaten im Sinne der vorliegenden Erfindung gehören beispielsweise Addukte von Diisocyanaten an Trimethylolpropan, Biurete, Uretdione (cyclodimerisierte Isocyanate), Isocyanurate (cyclotrimerisierte Isocyanate), Allophanate, Carbodiimid-basierte Isocyanate und dergleichen. Besonders hingewiesen sei auf handelsübliche Polyisocyanate, beispielsweise Polymer-MDI und dergleichen, die in verschiedenen Polymerisationsgraden kommerziell erhältlich sind.

Bei den Diisocyanaten setzt man vorzugsweise Verbindungen der allgemeinen Struktur O=C=N-X-N=C=O ein, wobei X ein aliphatischer, alicyclischer oder aromatischer Rest ist, vorzugsweise ein aliphatischer oder alicyclischer Rest mit 4 bis 18 C-Atomen.

Geeignete Diisocyanate sind beispielsweise: 1,5-Naphthylendiisocyanat, 4,4'-Diphenylmethandiisocyanat (= Methylen-diphenylen-diisocyanat, MDI), hydriertes MDI (H₁₂MDI, eine cyloaliphatische Verbindung), Xylylendiisocyanat (XDI), Tetramethylxylylendiisocyanat (TMXDI), 4,4'-Diphenyldimethylmethan-diisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI, insbesondere das technische Isomerengemisch aus im wesentlichen 2,4- und 2,6-Toluylen-diisocyanat), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (Isophorondiisocyanat = IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexamethylendiisocyanat (HDI), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisocyanatododecan und Dimerfettsäurediisocyanat (Handelsprodukt "Sovermol DDI 1410" der Cognis Deutschland GmbH & Co. KG).

Die aromatischen Isocyanate mit 2 bis 4 Isocyanatgruppen sind bevorzugt. Geeignet sind dabei sowohl solche Verbindungen, die alle Isocyanatgruppen an einem aromatischen Ring oder an mehreren miteinander in Konjugation stehenden aromatischen Ringen enthalten, als auch solche Verbindungen, die die Isocyanatgruppen an mehreren über Alkylengruppen, beispielsweise Methylengruppen, miteinander verbundenen Ringen enthalten.

In einer Ausführungsform der vorliegenden Erfindung setzt man höherfunktionelle Isocyanate ein, worunter solche Isocyanate verstanden werden, die eine mittlere NCO-Funktionalität von mindestens 2,0 aufweisen. Insbesondere sei hier auf alle handelsüblichen Polyisocyanate (etwa Polymer-MDI und dergleichen sowie die in **EP-A-438 836** offenbarten Polyisocyanate der dort näher bezeichneten Formeln 1 bis 7) verwiesen, die eine NCO-Funktionalität oberhalb von 2,0 aufweisen. Wie dem Fachmann bekannt spricht man von mittlerer NCO-Funktionalität, weil die entsprechenden höherfunktionellen Isocyanate nicht zwingend in Form chemisch einheitlicher Individuen wie etwa cyclotrimerisierten Isocyanaten vorliegen müssen, sondern - insbesondere bei handelsüblichen technischen Produkten - häufig Gemische verschiedener chemischer Individuen darstellen, die jeweils definierte NCO-Funktionalitäten aufweisen.

Gewünschtenfalls kann der erfindungsgemäße Reaktionssatz neben den Komponenten a) und b) auch weitere Komponenten enthalten, insbesondere Reaktionsbeschleuniger, Füllstoffe, Pigmente, Pigmentdispergiermittel, Entlüfter, Verlaufmittel, Substratnetzmittel.
Beispiele für geegnee Reaktionsbeschleuniger (Katalysatoren) sind z.B. Zinnmethylhexoate, Dibutylzinndilaurate, Zinncarboxylate, Wismutneodecanoate, Zirkoniumchelate, tertiäre Amine.

### Beispiele

### Eingesetzte Substanzen

**Sovermol 850**: Polyether/-ester mit einer OH-Zahl von 225 (Fa. Cognis Deutschland GmbH & Co KG)
**Sovermol 807**: verzweigter Polyether/-ester mit einer OH-Zahl von 215 (Fa. Cognis Deutschland GmbH & Co KG)
**Sovermol 1005**: leicht verzweigtes aliphatisches Diol mit einer OH-Zahl von 126 (Fa. Cognis Deutschland GmbH & Co KG)
**Sovermol 9155:** aromatischer Etheralkohol mit einer OH-Zahl von 365 (Fa. Cognis Deutschland GmbH & Co KG).
**Haftharz LHT:** Polyesterharz, OH-Zahl = 263 (Fa. Degussa)
**Desmodur VK 10:** Polyisocyanat auf Basis Diphenylmethandiisocyanat; NCO-Gehalt ca. 31% (Fa. Bayer)
**Zeolith-Paste:** Natriumaluminiumsilikat, 50%-ig in Rizinusöl (Molekularsieb bzw. Wasserbinder; Fa.UOP GmbH)
**Foamrez UL 28:** Dioctylzinncarboxylat (Katalysator; Fa. Huntsmann Polyurethanes)
**Suprasec 2010:** Diphenylmethandiisocyanat (MDI prepolymer; NCO-Gehalt ca. 26%: Fa. Huntsmann Polyurethanes)

### Messungen

Die **Gelzeit** wurde gemäß ASTM D 2471-88 bei einer eingesetzten Masse von 30g bestimmt.

Die **Haftfestigkeit** wurde gemäß ISO 4624 bestimmt. Dabei betrug die Schichtdicke des auf Beton aufgetragenen Reaktionssatzes ca. 3 mm.
Die Art des Bruches wird wie folgt klassifiziert:
A/B = Adhäsionsbruch zwischen Substrat und Beschichtung
A = Kohäsionsbruch im Substrat

Die **Shore-Härte** wurde gemäß DIN 53505 bestimmt. Es wurde jeweils die Shore-A und die Shore-D Härte bestimmt. Dementsprechend sind die Shore-Härten jeweils als Doppelwert angegeben, wobei der erste die Shore-A- und der zweite die Shore D-Härte bedeutet. Wenn also etwa in Beispiel 1 als Shore-Härte nach 45 min 40/11 angegeben ist, so bedeutet dies, daß die Shore-A-Härte 40 und die Shore-D-Härte 11 betrug.
**OH-Zahlen** wurden gemäß DGF C-V 17a bestimmt.

### Beispiel 1

5 g Sovermol 850, 75 g Sovermol 807, 20 g Sovermol 1005, 5 g Zeolith Paste und 0,5 g Foamrez UL 28 (10%-ig in Sovermol 850) wurden bei 20 °C miteinander vermischt. Die OH-Zahl der Mischung wurde zu 299,4 bestimmt.
Zu dieser Mischung wurden 47,7 g Desmodur VK 10 gegeben und der Ansatz gut durchgerührt. Der so hergestellte Reaktionssatz wurde auf handelsübliche Beton-Gehwegplatten aufgebracht. Die Menge 153,7 g wurde mit einem Spatel in einer Schichtdicke von ca. 3 mm aufgebracht.
Anschließend ließ man bei 20 °C aushärten und maß in bestimmten Abständen die Shore-Härten. Diese betrug nach 45 Minuten 40/11, nach 90 Minuten 45/14, nach 24
Stunden 61/20. Anschließend ließ man weitere 24 Stunden bei 80 °C aushärten. Die Shore-Härte betrug danach 82/35.

| Außerdem wurden folgende Parameter bestimmt: | |
|---|---|
| Gelzeit: | 3 min |
| Haftfestigkeit: | 2 MPa (dabei wurde ein Adhäsionsbruch zwischen Substrat und Beschichtung beobachtet) |

### Beispiel 2

5 g Sovermol 850, 75 g Sovermol 807, 20 g Sovermol 1005, 10 g Haftharz LTH (30%-ig in Sovermol 9155), 5 g Zeolith Paste und 0,5 g Foamrez UL 28 (10%-ig in Sovermol 850) wurden bei 20 °C miteinander vermischt. Die OH-Zahl der Mischung wurde zu 289,3 bestimmt.
Zu dieser Mischung wurden 54,1 g Desmodur VK 10 gegeben und der Ansatz gut durchgerührt. Der so hergestellte Reaktionssatz wurde auf handelsübliche Beton-Gehwegplatten aufgebracht. Die Menge 169,6 g wurde mit einem Spatel in einer Schichtdicke von ca. 3 mm aufgebracht.
Anschließend ließ man bei 20 °C aushärten und maß in bestimmten Abständen die Shore-Härten. Diese betrug nach 45 Minuten 28/--, nach 90 Minuten 32/9, nach 24 Stunden 57/18. Anschließend ließ man weitere 24 Stunden bei 80 °C aushärten. Die Shore-Härte betrug danach 86/41.

| Außerdem wurden folgende Parameter bestimmt: | |
|---|---|
| Gelzeit: | 4 min |
| Haftfestigkeit: | 2,5 MPa (dabei wurde ein Adhäsionsbruch zwischen Substrat und Beschichtung beobachtet) |

### Beispiel 3

5 g Sovermol 850, 75 g Sovermol 807, 20 g Sovermol 1005, 5 g Zeolith Paste und 0,5 g Foamrez UL 28 (10%-ig in Sovermol 1058) wurden bei 20 °C miteinander vermischt. Die OH-Zahl der Mischung wurde zu 299,4 bestimmt.
Zu dieser Mischung wurden 56,9 g Suprasec 2010 gegeben und der Ansatz gut durchgerührt. Der so hergestellte Reaktionssatz wurde auf handelsübliche Beton-Gehwegplatten aufgebracht. Die Menge 162,4 g wurde mit einem Spatel in einer Schichtdicke von ca. 3 mm aufgebracht.
Anschließend ließ man bei 20 °C aushärten und maß in bestimmten Abständen die Shore-Härten. Diese betrug nach 45 Minuten 70/25, nach 90 Minuten 77/29, nach 24 Stunden 87/40. Anschließend ließ man weitere 24 Stunden bei 80 °C aushärten. Die Shore-Härte betrug danach 93/49.

| Außerdem wurden folgende Parameter bestimmt: | |
|---|---|
| Gelzeit: | 3 min |
| Haftfestigkeit: | 3,5 MPa (dabei wurde ein Adhäsionsbruch zwischen Substrat und Beschichtung beobachtet) |

### Beispiel 4

5 g Sovermol 850, 75 g Sovermol 807, 20 g Sovermol 1005, 10 g Haftharz LTH (30%-ig in Sovermol 1058), 5 g Zeolith Paste und 0,5 g Foamrez UL 28 (10%-ig in Sovermol 1058) wurden bei 20 °C miteinander vermischt. Die OH-Zahl der Mischung wurde zu 289,3 bestimmt.

Zu dieser Mischung wurden 64,5 g Suprasec 2010 gegeben und der Ansatz gut durchgerührt. Der so hergestellte Reaktionssatz wurde auf handelsübliche Beton-Gehwegplatten aufgebracht. Die Menge 180 g wurde mit einem Spatel in einer Schichtdicke von ca. 3 mm aufgebracht.
Anschließend ließ man bei 20 °C aushärten und maß in bestimmten Abständen die Shore-Härten. Diese betrug nach 45 Minuten 59/16, nach 90 Minuten 63/20, nach 24 Stunden 86/38.
Anschließend ließ man weitere 24 Stunden bei 80 °C aushärten. Die Shore-Härte betrug danach 97/57.

| Außerdem wurden folgende Parameter bestimmt: | |
|---|---|
| Gelzeit: | 4 min |
| Haftfestigkeit: | 2,5 MPa (dabei wurde ein Adhäsionsbruch zwischen Substrat und Beschichtung beobachtet) |

## Patentansprüche

1. Verwendung von Polyolen mit mindestens 12 C-Atomen pro Molekül und mindestens 2 OH-Gruppen pro Molekül, mit der Maßgabe, dass pro Molekül maximal eine OH-Gruppe pro 6 Kohlenstoffatome vorhanden ist und der weiteren Maßgabe, dass in den Polyol-Molekülen keine Strukturelemente (-CH₂-CH₂-O-)ₙ, wobei n eine ganze Zahl bedeutet, die mindestens zwei beträgt, vorhanden sind, mit der Maßgabe, dass die Polyole ausgewählt sind aus der Gruppe (a) der Polyole, die erhältlich sind, indem man ein- und/oder mehrwertige Alkohole mit 1 bis 8 C-Atomen an epoxidierte Triglyceridöle und/oder deren Alkylester addiert, die gegebenenfalls gereinigten Additionsprodukte gewünschtenfalls mit Propylenoxid zur Reaktion bringt und die Produkte gegebenenfalls einer thermischen Nachbehandlung unterzieht und (b) der Dimerdiole und/oder Trimertriole, als Komponente für chemische Befestigungsmassen ("chemische Dübel") auf Polyurethan-Basis.

## Claims

1. Use of polyols containing at least 12 carbon atoms per molecule and at least 2 OH groups per molecule, with the proviso that there is at most one OH group for every 6 carbon atoms per molecule and with the further proviso that the polyol molecules contain no structural elements (-CH₂-CH₂O-)ₙ, where n is an integer of at least two, with the proviso that the polyols are selected from the group (a) of polyols which are obtainable by adding monohydric and/or polyhydric alcohols containing 1 to 8 carbon atoms onto epoxidized triglyceride oils and/or alkyl esters thereof, if desired reacting the optionally purified addition products with propylene oxide and optionally subjecting the products to a thermal aftertreatment and (b) dimer diols and/or trimer triols, as a component for chemical polyurethane-based stabilizing compounds ("chemical dowels").

## Revendications

1. Utilisation de polyols comportant au moins 12 atomes de C par molécule et au moins 2 groupes OH par molécule, étant précisé
- qu'un groupe OH pour 6 atomes de carbone au maximum est présent par molécule,
- en outre qu'il n'y a pas d'éléments structurels (-CH₂-CH₂-O-)n, n représentant un nombre entier valant au moins deux, dans les molécules de polyol, et
- que les polyols sont choisis dans le groupe
(a) des polyols pouvant étre obtenus par addition d'alcools mono et/ou polyvalents comportant 1 à 8 atomes de carbone sur des huiles de triglycérides époxydées et/ou leurs esters alkyliques, en mettant en réaction les produits de l'addition éventuellement purifiés, si on le souhaite, avec de l'oxyde de propylène et en soumettant les produits, le cas échéant, à un post-traitement thermique, et
(b) des diols dimères et/ou des diols trimères,
comme composants de masses de fixation chimique ("chevilles chimiques") à base de polyuréthane.
